# EUROPÄISCHE PATENTANMELDUNG

(11) **EP 1 147 941 A2**
(43) Veröffentlichungstag der Anmeldung: **24.10.2001**
(21) Anmeldenummer: 01108546.1
(22) Anmeldetag: 05.04.2001
(51) Int. Cl.: B60Q 1/068

(54) **Kraftfahrzeugscheinwerfer**

(30) Priorität: 22.04.2000 DE 10020035
(71) Anmelder: Hella KG Hueck & Co., 59552 Lippstadt (DE)
(72) Erfinder: Borgschulte, Hubert, 59609 Anröchte (DE); Kemper, Wolfgang, 59602 Rüthen (DE); Schäfers, Franz-Josef, 33106 Paderborn (DE)

(57) **Zusammenfassung**

Die Erfindung betrifft einen Kraftfahrzeugscheinwerfer mit einem im Gehäuse über eine Verstellvorrichtung verstellbar gelagerten Reflektor, wobei die Verstellvorrichtung aus einer Hülse mit einem Innengewinde und einem darin eingeschraubten Verstellbolzen besteht und die Verstellvorrichtung mit dem einen Ende an dem Reflektor und mit dem anderen Ende an dem Gehäuse befestigt ist.

Aufgabe der Erfindung ist es, einen Kraftfahrzeugscheinwerfer derart zu gestalten, dass keine Bauteile der Verstellvorrichtung bei einer unsachgemäßen Einstellung aufgrund von einem Betätigen über einen normalen Einstellweg hinweg beschädigt werden können.

Diese Aufgabe wird erfindungsgemäß dadurch gelöst, dass die Gewinde auf dem Verstellbolzen und in der Gewindehülse so lang ausgeführt sind, dass bei einem Hereinschrauben des Verstellbolzens bis zu einem in der Gewindehülse angeordneten federnden Anschlag das Gewinde des Verstellbolzens aus dem Gewinde der Gewindehülse herausgeschraubt wird. Durch den federnden Anschlag wird beim Zurückdrehen des Verstellbolzens das außer Eingriff befindliche Gewinde von Verstellbolzen und Gewindehülse allein durch das Rückdrehen des Verstellbolzens wieder in Eingriff gebracht.

## Beschreibung

Die Erfindung betrifft einen Kraftfahrzeugscheinwerfer mit einem im Gehäuse über eine Verstellvorrichtung verstellbar gelagerten Reflektor, wobei die Verstellvorrichtung aus einer Hülse mit einem Innengewinde und einem darin eingeschraubten Verstellbolzen besteht und die Verstellvorrichtung mit dem einen Ende an dem Reflektor und mit dem anderen Ende an dem Gehäuse befestigt ist.

Ein solcher Kraftfahrzeugscheinwerfer ist aus der DE 43 42 882 C1 bekannt.

Hierbei ist in die axial verlaufende Gewindebohrung der Gewindehülse ein Verstellbolzen mit seinem Außengewinde eingeschraubt. Mit Hilfe dieser Verstellvorrichtung kann die Reflektoreinheit, die mit zwei weitere Lagerstellen schwenkbar mit dem Gehäuse verbunden ist, um eine Achse verschwenkt werden. Bei dieser Verstellvorrichtung ist es nachteilig, dass bei unsachgemäßer Einstellung der Verstellvorrichtung aufgrund von einem Betätigen der Verstellvorrichtung über einen erforderlichen Einstellweg hinweg verschiedene Bauteile der Verstellvorrichtung, wie z.B. durch das Gegenschrauben des vorderen Endes des Verstellbolzens gegen den Boden der Gewindehülse das Gewinde der Gewindehülse und/oder das Gewinde des Verstellbolzens durch Überdrehen des Gewindes beschädigt werden können und die Funktion der Verstellanordnung nicht mehr gegeben ist.

Aufgabe der Erfindung ist es, einen Kraftfahrzeugscheinwerfer mit einem im Gehäuse über eine Verstellvorrichtung verstellbar gelagerten Reflektor, wobei die Verstellvorrichtung aus einer Hülse mit einem Innengewinde und einem darin eingeschraubten Verstellbolzen besteht und die Verstellvorrichtung mit dem einen Ende an dem Reflektor und mit dem anderen Ende an dem Gehäuse befestigt ist, derart zu gestalten, dass keine Bauteile der Verstellvorrichtung bei einer unsachgemäßen Einstellung der Verstellvorrichtung aufgrund von einem Betätigen der Verstellvorrichtung über einen normalen Einstellweg hinweg beschädigt werden können.

Diese Aufgabe wird erfindungsgemäß dadurch gelöst, dass die Gewinde auf dem Verstellbolzen und in der Gewindehülse so lang ausgeführt sind, dass bei einem Hereinschrauben des Verstellbolzens bis zu einem in der Gewindehülse angeordneten federnden Anschlag das Gewinde des Verstellbolzens aus dem Gewinde der Gewindehülse herausgeschraubt wird.

Durch den federnden Anschlag ergibt sich der weitere Vorteil, dass beim Zurückdrehen des Verstellbolzens das außer Eingriff befindliche Gewinde von Verstellbolzen und Gewindehülse allein durch das Rückdrehen des Verstellbolzens wieder in Eingriff gebracht wird.

Eine vorteilhafte Ausführungsform der Erfindung sieht vor, dass das federnde Element aus einem konvex zum zweiten Ende des Verstellbolzens gebogenen Teller oder Streifen besteht, wobei Teller oder Streifen einteilig mit der Gewindehülse ausgeformt sein können. Eine solche einteilige Ausführungsform ergibt die weiteren Vorteile, dass die Anzahl der Bauteile reduziert wird und dass die Gesamtbauhöhe der Gewindehülse minimiert werden kann.

Um die Verstellvorrichtung bei ihrer Erstmontage leichter montieren zu können ist vorgesehen, dass der Verstellbolzen an seinem, in die Gewindehülse eingeschraubten freien Ende über einen verjüngten, gewindelosen Bolzenabschnitt verfügt. Eine weiterer Vorteil dieser Ausführungsform besteht darin, dass die Gewindehülse und der Verstellbolzen nach einem Herausschrauben des Verstellbolzens aus der Gewindehülse annähernd in Eingriff gehalten werden, damit die Verstellvorrichtung ohne den Scheinwerfer zu demontieren wieder zusammengeschraubt werden kann.

Um die Anzahl der Einzelteile zu reduzieren, ist es zweckmäßig, wenn an dem Verstellbolzen ein Zahnrad des Winkelgetriebes einteilig angeformt ist.

Ebenfalls ist es vorteilhaft, wenn der Verstellbolzen mit Längsnuten gestaltet ist. Dadurch weist er bei geringem Werkstoffverbrauch zu seiner Herstellung eine große Biegesteifigkeit auf.

Eine weitere vorteilhafte Ausführungsform sieht vor, dass die Gewindehülse über einen an das Gehäuse angeformten Tubus verdrehsicher gehalten wird.

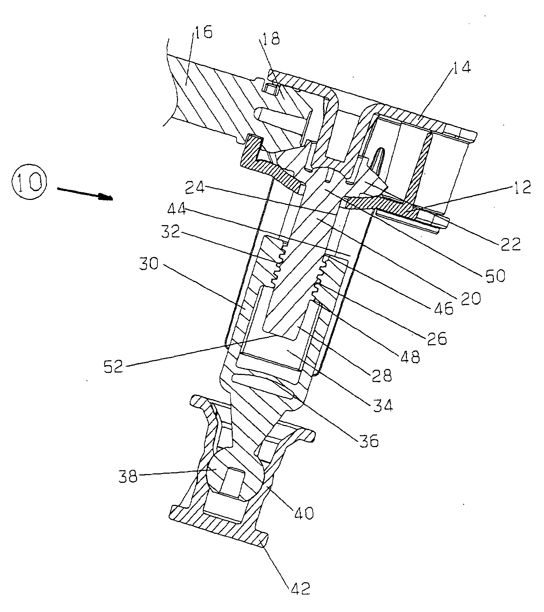

In der Zeichnung ist ein Ausführungsbeispiel der Erfindung dargestellt.

Die Zeichnung zeigt einen Längsschnitt durch eine Verstellvorrichtung eines Kraftfahrzeugscheinwerfers.

Der Kraftfahrzeugscheinwerfer weist im Inneren eine Verstellvorrichtung **(10)** für einen Reflektor **(42)** auf. Die Verstellvorrichtung **(10)** kann mit Hilfe einer nicht dargestellten Handhabe betätigt werden. Dabei wird eine im Gehäuse **(12)** fixierte Welle **(16)** axial gedreht und die Zähne eines an dem freien Ende der Welle **(16)** angeformten Zahnrades **(18)** greifen in'die Zähne eines Zahnrades **(22),** das an dem ersten Ende **(50)** des Verstellbolzens **(20)** angeformt ist. Der Verstellbolzen **(20)** ist drehbar jedoch axial fixiert in einem aus dem Gehäuse **(12)** und dem Lagerdeckel **(14)** gebildeten Getriebegehäuse gelagert.

Der Verstellbolzen **(20)** ist mit seinem Bolzengewinde **(26)** in das Hülsengewinde **(32)** der Gewindehülse **(30)** eingeschraubt. Zwischen dem ersten Ende **(46)** des Bolzengewindes **(26)** und dem angeformten Zahnrad **(22)** befindet sich ein gewindefreier Schaft **(24)** des Verstellbolzens **(20),** der länger ist, als das Hülsengewinde **(32)** der Gewindehülse **(30).** In der Gewindehülse **(30)** besteht zwischen dem zweiten Ende **(48)** des Hülsengewindes **(32)** und dem Federelement **(36)** eine gewindefreier Abschnitt **(34),** der gleich lang oder geringfügig länger ist, als der Abschnitt vom ersten Ende **(46)** des Bolzengewindes **(26)** bis zum zweiten Ende **(52)** des Verstellbolzens **(20).** Wird nun der Verstellbolzen **(20)** ganz in die Gewindehülse **(30)** eingeschraubt, so wird das Bolzengewinde **(26)** ganz aus dem Hülsengewinde **(32)** herausgeschraubt und der gewindefreie Schaft **(24)** ist frei im Hülsengewinde **(32)** drehbar. Gleichzeitig drückt das zweite Ende **(52)** des Verstellbolzens **(20)** auf das Federelement **(36).** Sobald der Verstellbolzen **(20)** zurückgedreht wird, greift das außer Eingriff befindliche Bolzengewinde **(26)** allein durch die Federkraft des Federelementes **(36)** wieder in das Hülsengewinde **(32)** ein und die Funktion der Verstellvorrichtung **(10)** ist wieder hergestellt. Damit der Verstellbolzen **(20)** und die Gewindehülse **(30)** bei der Erstmontage besser montiert und die Verstellvorrichtung **(10)** nach einem Herausschrauben des Bolzengewindes **(26)** aus dem Hülsengewinde **(32)** ohne großen Aufwand zusammengeschraubt werden kann, ist das zweite Ende **(52)** des Verstellbolzens **(20)** als gewindefreier, verjüngter Schaft **(28)** ausgebildet. Die Gewindehülse **(30)** wird mit Hilfe eines Tubus **(44),** der an das Gehäuse **(12)** angeformt ist, gegen Verdrehen gehalten.

An einem zweiten Ende der Gewindehülse **(30)** ist ein Kugelkopf **(38)** angeformt, der in eine Kugelschale **(40)** eingreift, die mit dem Reflektor **(42)** fest verbunden ist, damit der Reflektor **(42)** um eine Achse verschwenkt werden kann.

### Bezugszeichenliste:

- 10: Verstellvorrichtung
- 12: Gehäuse
- 14: Lagerdeckel
- 16: Welle
- 18: Zahnrad
- 20: Verstellbolzen
- 22: Zahnrad
- 24: gewindefreier Schaft
- 26: Bolzengewinde
- 28: gewindefreier verjüngter Schaft
- 30: Gewindehülse
- 32: Hülsengewinde
- 34: gewindefreier Abschnitt
- 36: Federelement
- 38: Kugelkopf
- 40: Kugelschale
- 42: Reflektor
- 44: Tubus
- 46: erstes Ende Bolzengewinde
- 48: zweites Ende Hülsengewinde
- 50: erstes Ende des Verstellbolzens
- 52: zweites Ende des Verstellbolzens

## Patentansprüche

1. Kraftfahrzeugscheinwerfer mit einem im Gehäuse **(12)** über eine Verstellvorrichtung **(10)** verstellbar gelagerten Reflektor **(42),** wobei die Verstellvorrichtung **(10)** aus einer Hülse **(30)** mit einem Innengewinde **(32)** und einem darin eingeschraubten Verstellbolzen **(20)** besteht und die Verstellvorrichtung **(10)** mit dem einen Ende an dem Reflektor **(42)** und mit dem anderen Ende an dem Gehäuse **(12)** befestigt ist, **dadurch gekennzeichnet, dass** die Gewinde auf dem Verstellbolzen **(20)** und in der Gewindehülse **(30)** so lang ausgeführt sind, dass bei einem Hereinschrauben des Verstellbolzens **(20)** bis zu einem in der Gewindehülse **(30)** angeordneten federnden Anschlag **(36)** das Gewinde **(26)** des Verstellbolzens **(20)** aus dem Gewinde **(32)** der Gewindehülse **(30)** herausgeschraubt wird.

2. Kraftfahrzeugscheinwerfer nach Anspruch 1, **dadurch gekennzeichnet, dass** zwischen dem ersten Ende **(50)** des Verstellbolzens **(20)** und dem ersten Ende **(46)** seines Gewindes **(26)** ein gewindefreier Schaft **(24)** gegeben ist, dessen Durchmesser gleich oder kleiner dem Kerndurchmesser des Bolzengewindes **(26)** ist.

3. Kraftfahrzeugscheinwerfer nach Anspruch 1 oder 2, **dadurch gekennzeichnet, dass** sich das Gewinde der Gewindehülse **(30)** lediglich über einen Abschnitt der Gesamtlänge der Längsbohrung der Gewindehülse **(30)** erstreckt.

4. Kraftfahrzeugscheinwerfer nach Anspruch 3, **dadurch gekennzeichnet, dass** der Gewindeabschnitt an der Eintrittsöffnung der Gewindehülse **(30)** für den Verstellbolzen **(20)** angrenzt.

5. Kraftfahrzeugscheinwerfer nach einem der vorstehenden Ansprüche, **dadurch gekennzeichnet, dass** die Länge des Hülsengewindes **(32)** geringer ist, als der gewindefreie Schaft **(24)** des Verstellbolzens **(20).**

6. Kraftfahrzeugscheinwerfer nach einem der vorstehenden Ansprüche, **dadurch gekennzeichnet, dass** der gewindefreie Abschnitt **(34)** der Gewindehülse **(30)** gleich lang oder geringfügig länger ist, als der Abschnitt des Verstellbolzens **(20)** vom ersten Ende **(46)** des Bolzengewindes **(26)** bis zum zweiten Ende **(52)** des Verstellbolzens **(20).**

7. Kraftfahrzeugscheinwerfer nach einem der vorstehenden Ansprüche, **dadurch gekennzeichnet, dass** der federnde Anschlag **(36)** ein konvex zum zweiten Ende **(52)** des Verstellbolzens **(20)** gebogener Teller oder Streifen ist.

8. Kraftfahrzeugscheinwerfer nach Anspruch 7, **dadurch gekennzeichnet, dass** der Teller oder Streifen einteilig mit der Gewindehülse (30) ausgeformt ist.

9. Kraftfahrzeugscheinwerfer nach einem der vorstehenden Ansprüche, **dadurch gekennzeichnet, dass** der Verstellbolzen **(20)** in dem an seinem zweiten Ende **(52)** sich anschließenden Bereich über einen gewindefreien, verjüngten Schaft **(28)** verfügt.

10. Kraftfahrzeugscheinwerfer nach einem der vorstehenden Ansprüche, **dadurch gekennzeichnet, dass** an dem ersten Ende **(50)** des Verstellbolzens **(20)** ein Zahnrad **(22)** eines Winkelgetriebes einstückig angeformt ist.

11. Kraftfahrzeugscheinwerfer nach einem der vorstehenden Ansprüche, **dadurch gekennzeichnet, dass** der Verstellbolzen **(20)** mit, den Querschnitt verkleinernden ohne merklich die Biegesteifigkeit verringernden Längsnuten gestaltet ist.

12. Kraftfahrzeugscheinwerfer nach einem der vorstehenden Ansprüche, **dadurch gekennzeichnet, dass** die Gewindehülse **(30)** mit Hilfe eines Tubus **(44)** verdrehsicher gehalten wird.
